# EUROPÄISCHE PATENTSCHRIFT

(11) **EP 1 227 604 B1**
(45) Veröffentlichungstag und Bekanntmachung des Hinweises auf die Patenterteilung: **29.11.2006**
(21) Anmeldenummer: 01125190.7
(22) Anmeldetag: 24.10.2001
(51) Int. Cl.: H04B 10/08, H04B 10/158, H04B 3/46

(54) **Verfahren zum Betriebe eines Datennetzes**
Method for connecting a data network
Procédé de connection dans un réseau de données

(30) Priorität: 07.11.2000 DE 10055103
(43) Veröffentlichungstag der Anmeldung: 31.07.2002
(73) Patentinhaber: DaimlerChrysler AG, 70567 Stuttgart (DE)
(72) Erfinder: Bösinger, Marcus, 70439 Stuttgart (DE); Brandes, Jens, 71034 Böblingen (DE); Marquardt, Dieter, 71083 Herrenberg (DE); Merget, Peter, 73733 Esslingen (DE); Petry, Franz-Josef, 71134 Aidlingen (DE); Seib, Hans-Gerd, 70374 Stuttgart (DE); Seidl, Dieter, 72766 Reutlingen (DE); Zeeb, Eberhard, Dr., 89081 Ulm-Juningen (DE)

(56) Entgegenhaltungen:
- US-A- 5 760 940
- US-A- 5 862 465
- CQ-DL AMATEURFUNKMAGAZIN, Bd. 11/1998, November 1998 (1998-11), Seiten 861-863, XP002306606 GRUNDLAGENARTIKEL- WARUM SO MESSEN

## Beschreibung

Die Erfindung betrifft ein Verfahren zum Betrieb eines Datennetzes mit den Merkmalen des Oberbegriffs des Anspruchs 1.

Aus der US 5 760 940 ist ein derartiges Verfahren bekannt. Dort ist ein Datennetz aus einer Vielzahl von Netzteilnehmern aufgebaut, die jeweils über eine Eingangsübertragungstrecke und eine Ausgangsübertragungsstrecke mit einer Zentraleinheit des Netzes verbunden sind, wobei eine Multiplexereinheit eine Ausgangsleitung der Zentraleinheit mit einer Eingangsleitung des jeweiligen Netzteilnehmers und eine Eingangsleitung der Zentraleinheit mit einer Ausgangsleitung des jeweiligen Netzteilnehmers verbindet. Dementsprechend ist dieses Datennetz sternförmig aufgebaut. Zur Bestimmung der aktuellen Pegelreserve der Übertragungsstrecke zwischen der Zentraleinheit und einem der Netzteilnehmer sendet die Zentraleinheit ein Testsignal mit zwei verschiedenen Signalstärken zum jeweiligen Netzteilnehmer. Die erste Signalstärke ist so gewählt, daß sie eine vorbestimmte Mindestsignalstärke übersteigt, während die zweite Signalstärke so gewählt ist, daß sie zwischen dieser Mindestsignalstärke und der ersten Signalstärke liegt. Der jeweilige Netzteilnehmer sendet das empfangene Testsignal zurück zur Zentraleinheit, die es auswertet. Die zweite Signalstärke ist dabei so gewählt, daß sie von der Zentraleinheit nicht mehr festgestellt werden kann, wenn die Übertragungsleistung der Übertragungsstrecke unter einen noch tolerierbaren Grenzwert abgesunken ist.

Mit diesem Verfahren kann somit festgestellt werden, ob die aktuell vorliegende Pegelreserve zur Empfindlichkeitsgrenze des Empfängers, also die Regelreserve zwischen der aktuellen Sendeleistung des Senders und der aktuellen Empfindlichkeitsgrenze des Empfängers, einen vorbestimmten Mindestwert besitzt, der für eine ordnungsgemäße Datenübertragung gefordert wird.

Im Unterschied zu einer sternförmigen Anordnung der Netzteilnehmer bezüglich der Zentraleinheit, kann ein Datennetz auch eine Ringstruktur besitzen. Ein Datennetz, insbesondere ein optisches Datennetz, kann aus einer Vielzahl einzelner Punkt-zu-Punkt-Verbindungen zusammengesetzt sein. Zwischen zwei benachbarten Punkten erstreckt sich eine Teilstrecke oder Übertragungsstrecke, die eingangsseitig durch einen Sender und ausgangsseitig durch einen Empfänger begrenzt ist. Ein einwandfreier Betrieb des gesamten Datennetzes ist nur dann möglich, wenn alle einzelnen Übertragungsstrecken fehlerfrei funktionsfähig sind. Dies gilt in besonderer Weise für Ringsysteme, bei denen das fehlerfreie Funktionieren aller Ringsegmente oder Übertragungsstrecken zwingend erforderlich ist, zumindest wenn es sich dabei um eine geschlossene Kette einzelner aufeinander folgender Übertragungsstrecken handelt. Der Ausfall eines einzigen Ringsegmentes, also einer einzigen Übertragungsstrecke eines Ringsystems führt zum Ausfall der gesamten Kommunikation. Es ist daher wichtig, die Funktionsfähigkeit des Datennetzes zu überprüfen.

Weitere Verfahren zum Betrieb von Datennetzen sind aus der US 5 862 465 und der US 5 760 940 bekannt, die jedoch nicht näher auf die Überwachung oder Steuerung der Pegelreserve eingehen.

Die Datenübertragung im Datennetz kann beispielsweise durch äußere Ereignisse gestört werden, beispielsweise durch einen Leitungsbruch. Störungen können aber auch dadurch auftreten, daß eine Dämpfung der Signalübertragung innerhalb der Übertragungsstrecke aufgrund von Alterungserscheinungen einzelner Komponenten, wie z.B. Sender und Empfänger, allmählich zunimmt. Sobald die Dämpfung zu groß wird, kann die Signalübertragung nicht mehr ordnungsgemäß erfolgen.

Aus dem CQ-DL Amateuerfunkmagazin, Bd. 11/1998, November 1998, Seiten 861-863, "Grundlagenartikel - Warum so messen" ist für den nicht leitungsgebundenen Funkbetrieb zusammengefasst, wie die Übertragungsqualität von Sender und Empfänger geprüft werden kann. Es wird dabei auf Störungen durch Rauschen eingegangen, jedoch nicht ausdrücklich auf die Pegelreserve und deren Messung. Das Messverfahren aus dem Amateurfunkbereich gibt dem Fachmann keinen Hinweis darauf, in welcher Weise die Pegelreserve bei optischen oder elektrischen Verkehrsmittel-Datenbussen gesteuert werden kann.

Aus der EP 0 411 188 B1 ist ein Verfahren zur Überwachung des Betriebszustandes einer elektrooptischen Übertragungseinrichtung bekannt, mit dem auch bei vergleichweise kleinen Unterschieden des optischen Empfangspegels eine sichere Unterscheidung zwischen den Zuständen "Licht" und "kein Licht" möglich ist. Mit Hilfe des bekannten Verfahrens kann somit relativ sicher festgestellt werden, ob eine Signalübertragung ordnungsgemäß oder fehlerhaft erfolgt. Dabei kann das bekannte Verfahren jedoch hinsichtlich der Fehlerursache nicht zwischen einem äußeren Ereignis oder einer Alterungserscheinung unterscheiden, denn sobald die Datenübertragung nicht mehr ordnungsgemäß arbeitet, wird ein entsprechendes Fehlersignal generiert.

Die vorliegende Erfindung beschäftigt sich mit dem Problem, ein Verfahren der eingangs genannten Art anzugeben, das eine bessere Ausnutzung der Leistungsfähigkeit eines Datennetzes ermöglicht.

Dieses Problem wird erfindungsgemäß durch ein Verfahren mit den Merkmalen der Ansprüche 1 oder 2 gelöst.

Die Erfindung beruht auf dem allgemeinen Gedanken, neben der aktuellen Pegelreserve zur Empfindlichkeitsgrenze zusätzlich die aktuelle Pegelreserve zur Übersteuerungsgrenze, also die Pegelreserve zwischen der aktuellen Sendeleistung des Senders und der aktuellen Übersteuerungsgrenze des Empfängers, zu bestimmen. Hierdurch ergibt sich die Möglichkeit, zusätzliche Leistungsdaten des Datennetzes bzw. der jeweiligen Übertragungsstrecke zu erfassen und zu überwachen. Durch diese Maßnahmen können fehlerhafte Informationsübertragungen aufgrund übersteuernder Signale vermieden werden, wodurch sich die Leistungsfähigkeit des Datennetzes erhöht.

Die Erfindung beruht hierbei auf dem allgemeinen Gedanken, die aktuelle Pegelreserve als Führungsgröße einer Regelung der Sendeleistung des Senders und/oder der Empfindlichkeit des Empfängers zu verwenden. Durch diese Maßnahme kann die Leistungsfähigkeit der jeweiligen Übertragungsstrecke und somit des gesamten Datennetzes besser ausgenutzt werden. Beispielsweise besitzt eine neue Übertragungsstrecke eine relativ geringe Dämpfung, so daß der Sender nicht mit seiner maximalen Sendeleistung zu senden braucht, um eine ordnungsgemäße Signalübertragung zu gewährleisten. Im Gegenteil, eine maximale Sendeleistung könnte dann sogar zu einer Übersteuerung des Empfängers führen, wodurch ebenfalls die Signalübertragung beeinträchtigt wird. Mit zunehmendem Alter der Übertragungsstrecke kann deren Dämpfung zunehmen. Durch die vorgeschlagene Regelung der Sendeleistung kann diese stets an die aktuellen Übertragungseigenschaften der Übertragungsstrecke angepaßt werden, um möglichst lange eine ordnungsgemäße Datenübertragung für die Übertragungsstrecke zu gewährleisten.

Die Vorteile dieser alternativen Ausführungsform werden auch bei einer Weiterbildung der erstgenannten Ausführungsform genutzt, wonach die Sendeleistung des Senders und/oder die Empfindlichkeit des Empfängers in Abhängigkeit der festgestellten aktuellen Pegelreserve zur Empfindlichkeitsgrenze und/oder zur Übersteuerungsgrenze geregelt werden.

Bei einer Weiterbildung der Erfindung kann für wenigstens eine Übertragungsstrecke überwacht werden, ob der zeitliche Verlauf der Pegelreserve zur Empfindlichkeitsgrenze und/oder zur Übersteuerungsgrenze eine Reserveabnahme zeigt. Aus dieser Reserveabnahme pro Zeit wird dann eine Geschwindigkeit der Reserveabnahme bestimmt, wobei für den Fall, daß diese Geschwindigkeit einen vorbestimmten Maximalwert erreicht oder überschreitet, eine entsprechende Meldung generiert wird. Durch diese Maßnahme ist es möglich, bereits vor dem Ausfall des Datennetzes eine Meldung zu generieren, daß demnächst mit dem Ausfall des Netzes gerechnet werden muß. Dementsprechend können geeignete Maßnahmen eingeleitet werden. Beispielsweise kann bei einem Datennetz, das in ein Fahrzeug eingebaut ist, ein Signal gesetzt werden, das den Fahrzeugführer veranlaßt, demnächst eine Wartung oder Inspektion des Fahrzeuges durchführen zu lassen.

Alternativ oder zusätzlich kann in Abhängigkeit der Geschwindigkeit, mit der die Pegelreserve abnimmt, eine Zeit berechnet werden, innerhalb der die Pegelreserve einen vorbestimmten Mindestwert erreicht, wobei für den Fall, daß diese berechnete Zeit einen vorbestimmten Minimalwert erreicht oder unterschreitet, eine entsprechende Meldung generiert wird. Auch diese Maßnahme dient dazu, einen bevorstehenden Ausfall des Datennetzes vorzeitig und insbesondere rechtzeitig zur Einleitung von Gegenmaßnahmen anzukündigen.

Bei einer bevorzugten Ausführungsform kann der Sender der zu überprüfenden Übertragungsstrecke im Testmodus ein Testsignal an den zugehörigen Empfänger senden, wobei die aktuelle Sendeleistung des Senders im Testmodus um einen vorbestimmten Reduzierungsbetrag reduziert oder um einen vorbestimmten Erhöhungsbetrag erhöht wird. Mit dem Empfänger wird dann festgestellt, ob das Testsignal ordnungsgemäß empfangen werden kann. Dabei wird ein negatives Testergebnis festgestellt, wenn das Testsignal nicht ordnungsgemäß empfangen wird, während ein positives Testergebnis festgestellt wird, wenn das Testsignal ordnungsgemäß empfangen wird. Dabei ist die aktuelle Pegelreserve zur Empfindlichkeitsgrenze bzw. zur Übersteuerungsgrenze kleiner als der Reduzierungsbetrag bzw. der Erhöhungsbetrag, wenn das Testergebnis negativ ist, und mindestens so groß wie der Reduzierungsbetrag bzw. der Erhöhungsbetrag, wenn das Testergebnis positiv ist.

Zusätzlich oder alternativ dazu kann die aktuelle Pegelreserve zur Empfindlichkeitsgrenze und/oder zur Übersteuerungsgrenze auch dadurch bestimmt werden, daß der Sender im Testmodus ein Testsignal an den Empfänger sendet, wobei die aktuelle Empfindlichkeit des Empfängers der zu überprüfenden Übertragungsstrecke im Testmodus um einen vorbestimmten Reduzierungsbetrag reduziert oder um einen vorbestimmten Erhöhungsbetrag erhöht wird. Mit dem Empfänger kann dann festgestellt werden, ob das Testsignal ordnungsgemäß empfangen wird, wobei ein negatives Testergebnis festgestellt wird, wenn das Testsignal nicht ordnungsgemäß empfangen wird, während ein positives Testergebnis festgestellt wird, wenn das Testergebnis ordnungsgemäß empfangen wird.

Bei einer besonders vorteilhaften Ausführungsform des erfindungsgemäßen Verfahrens kann im Testmodus das Senden, Empfangen und Auswerten des Testsignals innerhalb derselben Übertragungsstrecke zumindest solange mit schrittweise vergrößertem Reduzierungsbetrag oder Erhöhungsbetrag wiederholt werden, bis das Testergebnis negativ ist. Die aktuelle Pegelreserve zur Empfindlichkeitsgrenze bzw. zur Übersteuerungsgrenze liegt dann zwischen dem letzten Reduzierungsbetrag bzw. Erhöhungsbetrag mit positivem Testergebnis und dem ersten Reduzierungsbetrag bzw. Erhöhungsbetrag mit negativem Testergebnis. Durch eine entsprechende Auflösung der Schritte, mit denen die Testsignale wiederholt werden, kann die aktuelle Pegelreserve grundsätzlich beliebig genau bestimmt werden.

Bei einer Weiterbildung kann nach dem Testmodus ein Anpassungsmodus ablaufen, in dem die aktuelle Sendeleistung des Senders und/oder die aktuelle Empfindlichkeit des Empfängers der überprüften Übertragungsstrecke erhöht werden, wenn die ermittelte aktuelle Pegelreserve zur Empfindlichkeit unterhalb eines vorbestimmten unteren Grenzwertes liegt.

Alternativ oder zusätzlich kann nach dem Testmodus auch ein Anpassungsmodus ablaufen, in dem die aktuelle Sendeleistung des Senders und/oder die aktuelle Empfindlichkeit des Empfängers reduziert werden, wenn die ermittelte aktuelle Pegelreserve zur Übersteuerungsgrenze unterhalb eines vorbestimmten unteren Grenzwertes liegt.

Die Erfindung kommt bevorzugt bei solchen Datennetzen zur Anwendung, die mehrere Netzteilnehmer aufweisen, die jeweils zwischen zwei aufeinanderfolgenden Übertragungsstrecken angeordnet sind, wobei jeder Netzteilnehmer den Empfänger der ankommenden Übertragungsstrecke und den Sender der abgehenden Übertragungsstrecke aufweist. Bei einer besonderen Ausführungsform des erfindungsgemäßen Verfahrens kann dann einem dieser Netzteilnehmer eine Masterfunktion zugeordnet sein, so daß dieser Master-Netzteilnehmer den Testmodus für wenigstens eine Übertragsstrecke initiiert. Insbesondere bei einem ringförmig ausgebildeten Datennetz kann somit der Testmodus bei Übertragungsstrecken durchgeführt werden, die nicht direkt mit dem Master-Netzteilnehmer verbunden sind, da der eigentliche Test ohne aktive Mitwirkung des Master-Netzteilnehmern selbsttätig vom Sender und Empfänger der jeweiligen Übertragungsstrecke durchgeführt werden kann. Neben der Initiierung der einzelnen Tests kann der Master-Netzteilnehmer auch dazu dienen, daß die Testergebnisse sämtlicher Übertagungsstrecken im Master-Netzteilnehmer zentral gespeichert werden. Eine Auswertung der aktuellen Pegeldaten kann beispielsweise im Rahmen einer Diagnose des Datennetzes durchgeführt werden. Dies gilt insbesondere für den Fall, daß das Datennetz in einem Fahrzeug ausgebildet ist, wobei dann die Diagnose z.B. im Rahmen einer routinemäßigen Inspektion des Fahrzeuges durchgeführt werden kann.

Der Master-Netzteilnehmer kann bei einer bevorzugten Ausführungsform den Testmodus in Abhängigkeit wenigstens eines vorbestimmten Ereignisses initiieren. Ein derartiges Ereignis kann beispielsweise das Herunterfahren oder das Hochfahren des Datennetzes oder eine externe Diagnoseanweisung sein.

Es ist klar, daß der Master-Netzteilnehmer die Überprüfung der Übertragungsstrecken unabhängig voneinander und insbesondere simultan zueinander veranlassen kann.

Zweckmäßigerweise ist der Sender einer zu überprüfenden Übertragungsstrecke hinsichtlich seiner Sendeleistung skalierbar ausgebildet, d.h., die Sendeleistung des Senders ist einstellbar. Durch diese Bauform wird die Regelung der Sendeleistung nahe der Übertragungsstrecke ermöglicht. In entsprechender Weise kann auch der Empfänger der zu überwachenden Übertragungsstrecke hinsichlich seiner Empfindlichkeit skalierbar ausgebildet sein, um eine Regelung der Empfänger-Empfindlichkeit in Abhängigkeit der Pegelreserve durchführen zu können.

Es ist klar, daß das erfindungsgemäße Verfahren grundsätzlich bei einem beliebigen Datennetz durchführbar ist, insbesondere bei einem elektronischen Datennetz und/oder bei einem optischen Datennetz und/oder bei einem Funknetz und/oder bei einem Ultraschallnetz.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

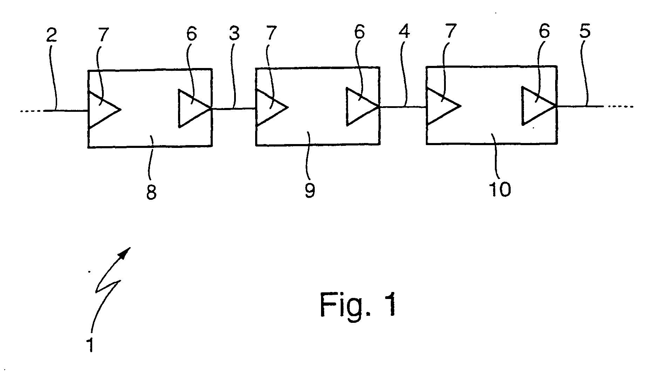

Die einzige Figur 1 zeigt eine schaltplanartige Prinzipdarstellung eines Datennetzes.

Entsprechend Fig. 1 kann ein Datennetz 1 mehrere Übertragungsstrecken 2,3,4 und 5 aufweisen, die ringförmig angeordnet sein können. Jede Übertragungsstrecke 2,3,4,5 ist eingangsseitig von einem Sender 6 und ausgangsseitig von einem Empfänger 7 begrenzt, d.h. ein Sender 6 bildet den Anfang und ein Empfänger 7 bildet das Ende einer jeden Übertragungsstrecke 2,3,4,5. Das Datennetz 1 besitzt mehrere Netzteilnehmer 8,9 und 10, die jeweils zwischen aufeinanderfolgenden Übertragungsstrecken 2,3,4,5 angeordnet sind. Jeder dieser Netzteilnehmer 8,9,10 enthält den Empfänger 7 der ankommenden Übertragungsstrecke 2,3,4,5 sowie den Sender 6 der abgehenden Übertragungsstrecke 2,3,4,5. In jedem Netzteilnehmer 8,9,10 werden über den Empfänger 7 ankommende Signale gewandelt und über den Sender 6 weitergeleitet, wobei stets die volle Senderleistung für die nächste Übertragungsstrecke 2,3,4,5 zur Verfügung steht. Insbesondere bei einem optischen Datennetz findet in den Netzteilnehmern 8,9,10 eine optisch-elektronisch-optische Wandlung statt. Insofern wirken die einzelnen Netzteilnehmer 8,9,10 wie Verstärker.

Einer der Netzteilnehmer, hier der z.B. der mit 8 bezeichnete Netzteilnehmer, ist als Master-Netzteilnehmer ausgebildet. Bei einem bestimmten Ereignis, z.B. beim Herunterfahren des Datennetzes 1 initiiert der Master-Netzteilnehmer 8 einen Testmodus bei einer, bei mehreren oder bei allen Übertragungsstrecken 2,3,4,5. Beispielsweise teilt der Master-Netzteilnehmer 8 dem Sender des mit 9 bezeichneten Netzteilnehmers und dem Empfänger 7 des mit 10 bezeichneten Netzteilnehmers mit, daß nun ein Test für die mit 4 bezeichnete Übertragsstrecke durchgeführt werden soll. Während des Testmodus sendet dann der Sender 6 ein Testsignal über die Übertragungsstrecke 4 zum zugehörigen Empfänger 7, wobei z.B. die Sendeleistung des Senders 6 um einen vorbestimmten Reduzierungsbetrag reduziert worden ist. Mit dem zugehörigen Empfänger 7 wird überprüft, ob das Testsignal ordnungsgemäß angkommt. Vorzugsweise wird diese Prozedur solange mit schrittweise vergrößertem Reduzierungsbetrag wiederholt, bis ein negatives Testergebnis vorliegt, also bis mit dem Empfänger 7 kein ordnungsgemäßer Empfang des Testsignals mehr feststellbar ist. Sobald das Testsignal nicht mehr ordnungsgemäß empfangen werden kann, ist die aktuelle Empfindlichkeitsgrenze des Empfängers 7 erreicht bzw. überschritten. Der zuletzt eingestellte Reduzierungsbetrag, bei dem noch ein positives Testergebnis, also ein ordnungsgemäßer Empfang des Testsignals, vorliegt, korreliert dann mit der aktuellen Pegelreserve zur Empfindlichkeitsgrenze. Die Ergebnisse dieser Testprozedur werden dem Master-Netzteilnehmer 8 mitgeteilt.

Es ist klar, daß der Sender 6 zur Durchführung dieser Testprozedur hinsichtlich seiner Sendeleistung skalierbar ausgebildet sein muß.

Alternativ kann die Testprozedur auch so durchgeführt werden, daß schrittweise die Sendeleistung des Senders 6 um einen vorbestimmten Erhöhungsbetrag erhöht wird. Sobald dann keine ordnungsgemäße Signalübertragung mehr möglich ist, liegt auch hier ein negatives Testergebnis vor. Eine ordnungsgemäße Signalübertragung ist dann nicht mehr möglich, wenn die Übersteuerungsgrenze des Empfängers 7 erreicht oder überschritten wird. Bei dieser Vorgehensweise wird die Pegelreserve zur Übersteuerungsgrenze ermittelt.

Bei einer anderen Vorgehensweise kann bei konstanter Sendeleistung schrittweise die Empfindlichkeitsgrenze des Empfängers 7 erhöht oder erniedrigt werden, bis auch hier ein oberer und/oder ein unterer Empfindlichkeitswert vorliegt, bei dem gerade noch eine ordnungsgemäße Datenübertragung gewährleistet werden kann. Ebenso sind beliebige Kombinationen der vorgenannten Prozeduren zur schrittweisen Veränderung des Reduzierungsbetrags bzw. des Erhöhungsbetrags der Sendeleistung des Senders bzw. der Empfindlichkeit des Empfängers möglich.

Bei einer bevorzugten Ausführungsform des Betriebsverfahrens für dieses Datennetz 1 kann in Abhängigkeit der ermittelten Pegelreserven die Sendeleistung des Senders 6 und/oder die Empfindlichkeit des Empfängers 7 geregelt werden. Ein bevorzugtes Ziel dieser Regelung ist beispielsweise ein gleichmäßiger Abstand der Sendeleistung sowohl nach unten zur Empfindlichkeitsgrenze des Empfängers als auch nach oben zur Übersteuerungsgrenze des Empfängers 7.

Darüber hinaus kann der zeitliche Verlauf der Pegelreserve überwacht werden. Zeigt dieser eine Reserveabnahme, kann aus der Reserveabnahme pro Zeit eine Geschwindigkeit für diese Reserveabnahme bestimmt werden, wobei dann eine entsprechende Meldung generiert wird, sobald diese Geschwindigkeit einen vorbestimmten Maximalwert erreicht oder übersteigt. Alternativ oder zusätzlich kann aus der ermittelten Geschwindigkeit der Reserveabnahme eine Zeit berechnet werden, innerhalb der die Pegelreserve einen vorbestimmten Mindestwert erreicht, wobei eine entsprechende Meldung generiert wird, wenn die berechnete Zeit einen vorbestimmten Minimalwert erreicht oder unterschreitet. Durch diese Maßnahmen kann eine mit einer allmählichen Reserveabnahme einhergehende Fehlfunktion des Datennetzes 1 vorhergesagt werden. Dadurch ist es z.B. möglich, geeignete präventive Maßnahmen einzuleiten, bevor es zu einem Ausfall des Netzes 1 kommt.

## Patentansprüche

1. Verfahren zum Betrieb eines optischen Datennetzes oder eines Ultraschallnetzes, das wenigstens eine durch einen Sender (6) und einen Empfänger (7) begrenzte leitungsgebundenen Übertragungsstrecke (2,3,4,5) aufweist, wobei in einem Testmodus für wenigstens eine Übertragungsstrecke deren aktuelle Pegelreserve zur Empfindlichkeitsgrenze, also zwischen der aktuellen Sendeleistung des Senders (6) und der aktuellen Empfindlichkeitsgrenze des Empfängers (7), bestimmt wird,
**dadurch gekennzeichnet, daß** im Testmodus für diese wenigstens eine Übertragungsstrecke außerdem deren aktuelle Pegelreserve zur Übersteuerungsgrenze, also zwischen der aktuellen Sendeleistung des Senders (6) und der aktuellen Übersteuerungsgrenze des Empfängers (7), bestimmt wird.

2. Verfahren nach Anspruch 1, **dadurch gekennzeichnet, dass** für wenigstens eine Übertragungstrecke überwacht wird, ob der zeitliche Verlauf der Pegelreserve zur Empfindlichkeitsgrenze oder zur Übersteuerungsgrenze eine Reserveabnahme zeigt.

3. Verfahren nach Anspruch 1 oder 2, **dadurch gekennzeichnet, dass** bei der wenigstens einen Übertragungsstrecke die Sendeleistung des Senders (6) und/oder die Empfindlichkeit des Empfängers (7) in Abhängigkeit der festgestellten aktuellen Pegelreserve zur Empfindlichkeitsgrenze geregelt werden.

4. Verfahren nach Anspruch 1 oder 2, **dadurch gekennzeichnet, daß** bei der wenigstens einen Übertragungstrecke die Sendeleistung des Senders (6) und/oder die Empfindlichkeit des Senders (7) in Abhängigkeit der festgestellten aktuellen Pegelreserve zur Empfindlichkeitsgrenze und/oder zur Übersteuerungsgrenze geregelt werden.

5. Verfahren nach Anspruch 2, **dadurch gekennzeichnet, daß** aus der Reserveabnahme pro Zeit eine Geschwindigkeit der Reserveabnahme bestimmt wird, wobei für den Fall, daß diese Geschwindigkeit einen vorbestimmten Maximalwert erreicht oder überschreitet, eine entsprechende Meldung generiert wird.

6. Verfahren nach einem der Ansprüche 2 bis 5, **dadurch gekennzeichnet, dass** aus der Reserveabnahme pro Zeit eine Geschwindigkeit der Reserveabnahme bestimmt wird, wobei in Abhängigkeit dieser Geschwindigkeit eine Zeit berechnet wird, innerhalb der die Pegelreserve einen vorbestimmten Mindestwert errreicht, wobei für den Fall, daß diese berechnete Zeit einen vorbestimmten Minimalwert erreicht oder unterschreitet, eine entsprechend Meldung generiert wird.

7. Verfahren nach einem der Ansprüche 1 bis 6, **dadurch gekennzeichnet, daß** der Sender (6) der zu überprüfenden Übertragungsstrecke im Testmodus ein Testsignal an den Empfänger (7) dieser Übertragungsstrecke sendet, wobei die aktuelle Sendeleistung des Senders (6) im Testmodus um einen vorbestimmten Reduzierungsbetrag reduziert oder um einen vorbestimmten Erhöhungsbetrag erhöht wird, wobei mit dem Empfänger (7) festgestellt wird, ob das Testsignal ordnungsgemäß empfangen wird, wobei ein negatives Testergebnis festgestellt wird, wenn das Testsignal nicht ordnungsgemäß empfangen wird, und wobei ein positives Testergebnis festgestellt wird, wenn das Testsignal ordnungsgemäß empfangen wird.

8. Verfahren nach einem der Ansprüche 1 bis 6, **dadurch gekennzeichnet, daß** der Sender (6) der zu überprüfenden Übertragungsstrecke im Testmodus ein Testsignal an den Empfänger (7) dieser Übertragungsstrecke sendet, wobei die aktuelle Empfindlichkeit des Empfängers (7) im Testmodus um einen vorbestimmten Reduzierungsbetrag reduziert oder um einen vorbestimten Erhöhungsbetrag erhöht wird, wobei mit dem Empfänger (7) festgestellt wird, ob das Testsignal ordnungsgemäß empfangen wird, wobei ein negatives Testergebnis festgestellt wird, wenn das Testsignal nicht ordnungsgemäß empfangen wird, und wobei ein positives Testergebnis festgestellt wird, wenn das Testsignal ordnungsgemäß empfangen wird.

9. Verfahren nach Anspruch 7 oder 8, **dadurch gekennzeichnet, daß** im Testmodus das Senden, Empfangen und Auswerten des Testsignals zumindest solange mit schrittweise vergrößertem Reduzierungsbetrag oder Erhöhungsbetrag wiederholt wird, bis das Testergebnis negativ ist.

10. Verfahren nach einem der Ansprüche 1 bis 9, **dadurch gekennzeichnet, daß** nach dem Testmodus ein Anpassungsmodus abläuft, in dem die aktuelle Sendeleistung des Senders (6) und/oder die aktuelle Empfindlichkeit des Empfängers (7) erhöht werden, wenn die ermittelte aktuelle Pegelreserve zur Empfindlichkeit unterhalb eines vorbestimmten unteren Grenzwertes liegt.

11. Verfahren nach einem der Ansprüche 1 bis 10, **dadurch gekennzeichnet, daß** nach dem Testmodus ein Anpassungsmodus abläuft, in dem die aktuelle Sendeleistung des Senders (6) und/oder die aktuelle Empfindlichkeit des Empfängers (7) reduziert werden, wenn die ermittelte aktuelle Pegelreserve zur Übersteuerungsgrenze unterhalb eines vorbestimmten unteren Grenzwertes liegt.

12. Verfahren nach einem der Ansprüche 1 bis 11, **dadurch gekennzeichnet, daß** das Datennetz (1) mehrere Netzteilnehmer (8,9,10) aufweist, die jeweils zwischen zwei aufeinanderfolgenden Übertragungsstrecken (2,3,4,5) angeordnet sind, wobei jeder Netzteilnehmer (8,9,10) den Empfänger (7) der ankommenden Übertragungsstrecke und den Sender (6) der abgehenden Übertragungsstrecke aufweist, wobei einem dieser Netzteilnehmer (8) eine Masterfunktion zugeordnet ist, wobei dieser Master-Netzteilnehmer (8) den Testmodus für wenigstens eine Übertragungsstrecke initiiert.

13. Verfahren nach Anspruch 12, **dadurch gekennzeichnet, daß** der Master-Netzteilnehmer (8) den Testmodus in Abhängigkeit wenigstens eines vorbestimmten Ereignisses initiiert.

14. Verfahren nach Anspruch 13, **dadurch gekennzeichnet, daß** das vorbestimmte Ereignis das Herunterfahren des Datennetzes (1) oder eine externe Diagnoseanweisung ist.

15. Verfahren nach einem der Ansprüche 1 bis 14, **dadurch gekennzeichnet, daß** bei mindestens einer Übertragungsstrecke der Sender (6) hinsichtlich seiner Sendeleistung skalierbar ausgebildet ist.

16. Verfahren nach einem der Ansprüche 1 bis 15, **dadurch gekennzeichnet, daß** bei mindestens einer Übertragungsstrecke der Empfänger (7) hinsichtlich seiner Empfindlichkeit skalierbar ausgebildet ist.

## Claims

1. Method for operating an optical data network or an ultrasonic network having at least one cable-based transmission path (2, 3, 4, 5) which is bounded by a transmitter (6) and a receiver (7), the instantaneous level margin of at least one transmission path with respect to the sensitivity limit, that is to say between the instantaneous transmission power of the transmitter (6) and the instantaneous sensitivity limit of the receiver (7), being determined in a test mode for said at least one transmission path, **characterized in that** the instantaneous level margin of said at least one transmission path with respect to the overload limit, that is to say between the instantaneous transmission power of the transmitter (6) and the instantaneous overload limit of the receiver (7), is also determined in the test mode for said at least one transmission path.

2. Method according to Claim 1, **characterized in that** the fact of whether the temporal profile of the level margin with respect to the sensitivity limit or with respect to the overload limit exhibits a margin decrease is monitored for at least one transmission path.

3. Method according to Claim 1 or 2, **characterized in that**, in the case of the at least one transmission path, the transmission power of the transmitter (6) and/or the sensitivity of the receiver (7) is/are controlled on the basis of the determined instantaneous level margin with respect to the sensitivity limit.

4. Method according to Claim 1 or 2, **characterized in that**, in the case of the at least one transmission path, the transmission power of the transmitter (6) and/or the sensitivity of the receiver (7) is/are controlled on the basis of the determined instantaneous level margin with respect to the sensitivity limit and/or with respect to the overload limit.

5. Method according to Claim 2, **characterized in that** the margin decrease per time is used to determine a speed of the margin decrease, an appropriate message being generated if this speed reaches or exceeds a predetermined maximum value.

6. Method according to one of Claims 2 to 5, **characterized in that** the margin decrease per time is used to determine a speed of the margin decrease, a time during which the level margin reaches a predetermined minimum value being calculated on the basis of this speed, and an appropriate message being generated if this calculated time reaches or undershoots a predetermined minimum value.

7. Method according to one of Claims 1 to 6, **characterized in that** the transmitter (6) of the transmission path to be checked transmits a test signal to the receiver (7) of this transmission path in the test mode, the instantaneous transmission power of the transmitter (6) being reduced by a predetermined reduction amount or being increased by a predetermined increase amount in the test mode, the receiver (7) being used to determine whether the test signal is properly received, a negative test result being determined if the test signal is not properly received, and a positive test result being determined if the test signal is properly received.

8. Method according to one of Claims 1 to 6, **characterized in that** the transmitter (6) of the transmission path to be checked transmits a test signal to the receiver (7) of this transmission path in the test mode, the instantaneous sensitivity of the receiver (7) being reduced by a predetermined reduction amount or being increased by a predetermined increase amount in the test mode, the receiver (7) being used to determine whether the test signal is properly received, a negative test result being determined if the test signal is not properly received, and a positive test result being determined if the test signal is properly received.

9. Method according to Claim 7 or 8, **characterized in that**, in the test mode, the transmission, reception and evaluation of the test signal are repeated, with the reduction amount or increase amount being gradually increased, at least until the test result is negative.

10. Method according to one of Claims 1 to 9, **characterized in that** a matching mode takes place after the test mode, in which the instantaneous transmission power of the transmitter (6) and/or the instantaneous sensitivity of the receiver (7) is/are increased if the determined instantaneous level margin with respect to the sensitivity is below a predetermined lower limiting value.

11. Method according to one of Claims 1 to 10, **characterized in that** a matching modes takes place after the test mode, in which the instantaneous transmission power of the transmitter (6) and/or the instantaneous sensitivity of the receiver (7) is/are reduced if the determined instantaneous level margin with respect to the overload limit is below a predetermined lower limiting value.

12. Method according to one of Claims 1 to 11, **characterized in that** the data network (1) has a plurality of network subscribers (8, 9, 10) which are each arranged between two successive transmission paths (2, 3, 4, 5), each network subscriber (8, 9, 10) having the receiver (7) of the incoming transmission path and the transmitter (6) of the outgoing transmission path, one of these network subscribers (8) being assigned a master function, and this master network subscriber (8) initiating the test mode for at least one transmission path.

13. Method according to Claim 12, **characterized in that** the master network subscriber (8) initiates the test mode on the basis of at least one predetermined event.

14. Method according to Claim 13, **characterized in that** the predetermined event is the powering down of the data network (1) or an external diagnosis instruction.

15. Method according to one of Claims 1 to 14, **characterized in that** the transmission power of the transmitter (6) is designed to be scalable in the case of at least one transmission path.

16. Method according to one of Claims 1 to 15, **characterized in that** the sensitivity of the receiver (7) is designed to be scalable in the case of at least one transmission path.

## Revendications

1. Procédé pour faire fonctionner un réseau de données optique ou un réseau à ultrasons qui présente au moins une section de transmission par ligne (2, 3, 4, 5) délimitée par un émetteur (6) et un récepteur (7), la réserve de niveau par rapport au seuil de sensibilité, c'est-à-dire entre la puissance d'émission actuelle de l'émetteur (6) et le seuil de sensibilité actuel du récepteur (7), étant déterminée pour au moins une section de transmission dans un mode de test, **caractérisé en ce que** la réserve de niveau actuelle par rapport au seuil de surexcitation, c'est-à-dire entre la puissance d'émission actuelle de l'émetteur (6) et le seuil de surexcitation actuel du récepteur (7), est en plus déterminée pour cette au moins une section de transmission dans un mode de test.

2. Procédé selon la revendication 1, **caractérisé en ce que** l'on surveille au moins pour une section de transmission si l'évolution dans le temps de la réserve de niveau par rapport au seuil de sensibilité ou au seuil de surexcitation présente une diminution de la réserve.

3. Procédé selon la revendication 1 ou 2, **caractérisé en ce qu'**avec l'au moins une section de transmission, la puissance d'émission de l'émetteur (6) et/ou la sensibilité du récepteur (7) est régulée en fonction de la réserve de niveau actuelle déterminée par rapport au seuil de sensibilité.

4. Procédé selon la revendication 1 ou 2, **caractérisé en ce qu'**avec l'au moins une section de transmission, la puissance d'émission de l'émetteur (6) et/ou la sensibilité du récepteur (7) est régulée en fonction de la réserve de niveau actuelle déterminée par rapport au seuil de sensibilité et/ou par rapport au seuil de surexcitation.

5. Procédé selon la revendication 2, **caractérisé en ce qu'**une vitesse de diminution de la réserve est déterminée à partir de la diminution de la réserve par unité de temps, un message correspondant étant généré dans le cas où cette vitesse atteint ou dépasse une valeur maximale prédéfinie.

6. Procédé selon l'une des revendications 2 à 5, **caractérisé en ce qu'**une vitesse de diminution de la réserve est déterminée à partir de la diminution de la réserve par unité de temps, un temps étant calculé en fonction de cette vitesse à l'intérieur duquel la réserve de seuil atteint une valeur minimale prédéfinie, un message correspondant étant généré dans le cas où ce temps calculé atteint ou devient inférieur à une valeur minimale prédéfinie.

7. Procédé selon l'une des revendications 1 à 6, **caractérisé en ce que** l'émetteur (6) de la section de transmission à contrôler envoie en mode de test un signal de test au récepteur (7) de cette section de transmission, la puissance d'émission actuelle de l'émetteur (6) en mode de test étant réduite d'une valeur de réduction prédéfinie ou augmentée d'une valeur d'augmentation prédéfinie, le récepteur (7) étant utilisé pour déterminer si le signal de test est reçu correctement, un résultat négatif du test étant constaté lorsque le signal de test n'est pas reçu correctement et un résultat positif du test étant constaté lorsque le signal de test est reçu correctement.

8. Procédé selon l'une des revendications 1 à 6, **caractérisé en ce que** l'émetteur (6) de la section de transmission à contrôler envoie en mode de test un signal de test au récepteur (7) de cette section de transmission, la sensibilité actuelle du récepteur (7) en mode de test étant réduite d'une valeur de réduction prédéfinie ou augmentée d'une valeur d'augmentation prédéfinie, le récepteur (7) étant utilisé pour déterminer si le signal de test est reçu correctement, un résultat négatif du test étant constaté lorsque le signal de test n'est pas reçu correctement et un résultat positif du test étant constaté lorsque le signal de test est reçu correctement.

9. Procédé selon la revendication 7 ou 8, **caractérisé en ce qu'**en mode de test, l'émission, la réception et l'interprétation du signal de test sont répétées avec une valeur de réduction ou une valeur de d'augmentation incrémentée pas à pas au moins jusqu'à ce que le résultat du test devienne négatif.

10. Procédé selon l'une des revendications 1 à 9, **caractérisé en ce qu'**après le mode de test se déroule un mode d'adaptation dans lequel la puissance d'émission actuelle de l'émetteur (6) et/ou la sensibilité actuelle du récepteur (7) sont augmentées si la réserve de niveau actuelle déterminée par rapport au seuil de sensibilité est inférieure à une valeur de seuil inférieure prédéfinie.

11. Procédé selon l'une des revendications 1 à 10, **caractérisé en ce qu'**après le mode de test se déroule un mode d'adaptation dans lequel la puissance d'émission actuelle de l'émetteur (6) et/ou la sensibilité actuelle du récepteur (7) sont réduites si la réserve de niveau actuelle déterminée par rapport au seuil de surexcitation est inférieure à une valeur de seuil inférieure prédéfinie.

12. Procédé selon l'une des revendications 1 à 11, **caractérisé en ce que** le réseau de données (1) présente plusieurs périphériques de réseau (8, 9, 10) qui sont respectivement disposés entre deux sections de transmission (2, 3, 4, 5) successives, chaque périphérique de réseau (8, 9, 10) présentant le récepteur (7) de la section de transmission arrivante et l'émetteur (6) de la section de transmission partante, une fonction de maître étant affectée à l'un de ces périphériques de réseau (8), ce périphérique de réseau maître (8) initiant le mode de test pour au moins une section de transmission.

13. Procédé selon la revendication 12, **caractérisé en ce que** le périphérique de réseau maître (8) initie le mode de test en fonction d'au moins un événement prédéfini.

14. Procédé selon la revendication 13, **caractérisé en ce que** l'événement prédéfini est un arrêt du réseau de données (1) ou une instruction de diagnostic externe.

15. Procédé selon l'une des revendications 1 à 14, **caractérisé en ce qu'**avec au moins une section de transmission, l'émetteur (6) est réalisé avec une puissance d'émission modulable.

16. Procédé selon l'une des revendications 1 à 15, **caractérisé en ce qu'**avec au moins une section de transmission, le récepteur (7) est réalisé avec une sensibilité de réception modulable.
